# FASCICULE DE BREVET EUROPEEN

(11) **EP 3 214 049 B1**
(45) Date de publication et mention de la délivrance du brevet: **09.10.2024**
(21) Numéro de dépôt: 17158931.0
(22) Date de dépôt: 02.03.2017
(51) Int. Cl.: C02F 3/04, C02F 3/12, C02F 3/10, C02F 3/30

(54) **DISPOSITIF D'ASSAINISSEMENT DES EAUX USÉES COMPRENANT UN LIT MICROBIOLOGIQUE**
VORRICHTUNG ZUR BEHANDLUNG VON ABWASSER MIT EINEM MIKROBIOLOGISCHEN BETT
DEVICE FOR TREATING WASTEWATER COMPRISING A MICROBIOLOGICAL BED

(30) Priorité: 03.03.2016 BE 201605159
(43) Date de publication de la demande: 06.09.2017
(73) Titulaire: EPUR S.A., 4460 Grace-Hollogne (BE)
(72) Inventeur: HARTENSTEIN, Nadine, 4100 Seraing (BE)
(74) Mandataire: Office Freylinger

(56) Documents cités:
- EP-A1- 0 601 551
- EP-A1- 1 338 570
- EP-A1- 1 625 886
- EP-A1- 1 734 014
- DE-U1- 29 907 872
- KR-A- 20020 011 512
- US-A- 4 521 311

## Description

### Domaine technique

La présente invention concerne l'assainissement (épuration) des eaux usées et plus particulièrement des dispositifs d'assainissement des eaux usées, notamment des stations d'épuration des eaux usées domestiques, agricoles ou industrielles.

### Etat de la technique

Les réacteurs aérobies à lit fixe immergé sont largement utilisés pour toutes sortes d'applications microbiologiques, notamment pour la dégradation d'effluents agricoles, industriels ou domestiques.

L'épuration individuelle des eaux domestiques peut être réalisée grâce à des petites stations (microstations) d'épuration qui comprennent plusieurs compartiments. L'eau passe successivement par les compartiments intégrant chacun une fonction différente, par exemple le dégraissage des eaux, la sédimentation des particules, la dégradation microbiologique aérobie, la décantation, etc. Dans les installations de plus grande taille pour l'épuration des eaux usées industrielles ou agricoles, ces différents compartiments sont généralement des cuves séparées.

La dégradation microbiologique aérobie nécessite l'apport d'oxygène nécessaire au développement et à l'action de dégradation et d'épuration des micro-organismes. Les stations d'épuration à réacteur aérobie à lit fixe immergé sont par conséquent équipées de dispositifs d'aération forcée comprenant habituellement un dispositif de micro-bullage ou d'aérateurs fines bulles placé sous le lit fixe de micro-organismes relié à un compresseur. Bien qu'il existe un grand nombre de variantes différentes, l'objectif commun est de garantir une bonne répartition des bulles d'air à l'intérieur du lit et donc une importante surface d'échange air-eau.

Or, l'injection forcée d'air requiert non seulement l'appareillage nécessaire, mais consomme de plus en permanence de l'énergie entrainant ainsi des frais de fonctionnement et de maintenance importants.

De plus, dans les solutions connues de dispositifs d'assainissement des eaux usées, le colmatage du lit microbiologique représente un problème récurrent engendrant non seulement des frais importants, mais oblige l'utilisateur à surveiller fréquemment son installation et à nettoyer ou même remplacer régulièrement les supports du lit microbiologique.

DE 299 07 872 décrit un corps de filtre pour petites stations d'épuration pour post-traitement biologique anaérobie et aérobie dans un boîtier de corps de filtre, dont la première entrée est reliée à une sortie amont d'une fosse de sédimentation à chambres multiples et dont la première sortie est disposée en dessous de ce niveau, caractérisé en ce que le corps de filtre est rempli d'une charge grossière appropriée pour les organismes sous une surface de filtre supérieure vers laquelle la première entrée conduit, et a en dessous de la première sortie une section anaérobie et au-dessus une section aérobie pour le traitement de suivi US4521311 décrit un dispositif de traitement d'eau aérobie comprenant deux unités dont l'une comprend un lit biologique fixe.

### Objet de l'invention

Un objet de la présente invention est par conséquent de proposer une solution d'assainissement des eaux usées, qui intègre un traitement aérobie, notamment de stations d'épuration des eaux usées domestiques, et dont le fonctionnement normal puisse être réalisé sans apport d'énergie (électrique) (à l'exception le cas échéant des opérations de maintenance, etc.) et dont les interventions de maintenance, en particulier sur le lit microbiologique, sont nettement réduites.

### Description générale de l'invention

Afin de résoudre les problèmes mentionnés ci-dessus, la présente invention propose, dans un premier aspect, un dispositif d'assainissement d'eaux usées comprenant au moins une cuve avec un réacteur entièrement aérobie à lit microbiologique à percolation des eaux par gravitation, avec une arrivée des eaux usées en partie haute et une évacuation des eaux épurées en partie basse de la cuve, et un compartiment de prétraitement en amont du réacteur aérobie adapté pour la sédimentation et/ou la digestion anaérobie des eaux usées, une sortie du compartiment de prétraitement étant raccordée à l'arrivée des eaux (maintenant prétraitées) du réacteur aérobie et comprenant un filtre primaire agencé pour limiter le transfert de matières solides ou surnageantes vers le réacteur aérobie ; un lit microbiologique comprenant aux moins deux couches superposées de supports microbiologiques sous forme de granules durs d'une granulométrie entre 5 et 30 mm, deux couches superposées adjacentes de supports microbiologiques sous forme de granules étant séparées entre-elles par une zone intermédiaire d'oxygénation sans granules. Selon l'invention, la ou les zones intermédiaires d'oxygénation sont raccordées d'une part à une prise d'air et d'autre part à une sortie par ventilation naturelle haute, un tube vertical placé dans le réacteur aérobie, dont l'extrémité inférieure se trouve en-dessous du niveau de l'évacuation des eaux épurées et dont l'extrémité supérieure est la prise d'air se trouvant au-dessus du niveau supérieur de la cuve ouverte à l'atmosphère libre, le tube vertical présentant une ouverture à hauteur de la ou des zones d'oxygénation intermédiaires et étant relié à la prise d'air, un transfert s'effectuant via une ou plusieurs fenêtres de circulation d'air aménagées dans le tube de prise d'air à la hauteur de la zone intermédiaire d'oxygénation. Selon l'invention, l'oxygénation est réalisée d'une part par un passage de l'eau sous forme de gouttes (pluie) par la zone intermédiaire d'oxygénation et d'autre part par le passage de l'air au travers des interstices formés entre les granules durs en contre-courant à une percolation de l'eau de haut en bas. Pour des dispositifs avec une faible hauteur totale de lit microbiologique (< 1 m), il peut ne pas être nécessaire de prévoir de zone d'oxygénation entre deux couches de supports microbiologiques. Le compartiment de prétraitement peut être intégré dans la même cuve que le réacteur aérobie ou peut représenter une cuve séparée. Dans ce dernier cas, le compartiment de prétraitement peut même être une cuve ou fosse toutes eaux (fosse septique) existante.

La configuration particulière d'un dispositif d'assainissement ou station d'épuration des eaux usées selon la présente invention présente plusieurs avantages.

D'abord les granules durs de la granulométrie indiquée forment non seulement un lit incompressible et mécaniquement résistant dans le temps, mais présente également une proportion de vide importante entre les granules. Ces interstices empêchent d'une part le colmatage du lit par des particules non retenues par le filtre primaire, mais allongent d'autre part le temps de séjour de ces particules dans le lit, favorisant ainsi leur digestion complète. Le filtre primaire peut ainsi être un filtre relativement grossier, par exemple avec un seuil de absorption de 40% ou plus. L'avantage qui en découle est par conséquent une réduction très significative des incidents de colmatage au niveau du réacteur aérobie et donc des frais de maintenance (nettoyage, remplacement) nettement réduits par rapport aux solutions connues. Il apparait que le lit microbiologique d'un dispositif selon l'invention peut être opéré en continu sans intervention pendant des périodes allongées.

En outre, la solution selon l'invention est passive dans son fonctionnement normal : en effet, l'aération du réacteur entièrement aérobie ne requiert pas d'énergie mais met à bénéfice l'effet cheminée de manière à créer un courant d'air entre la prise d'air en passant par la (ou les) zone(s) d'oxygénation intermédiaire et sortant par la sortie par ventilation haute. L'oxygénation est rendu possible d'une part par le passage de l'eau sous forme de gouttes (pluie) par la (ou les) zone(s) d'oxygénation intermédiaire et d'autre part par le passage de l'air au travers des interstices formés entre les granules durs en contre-courant à la percolation de l'eau de haut en bas. La percolation de l'eau au travers du dispositif est de préférence organisée de manière alternative de telle sorte que l'oxygénation entre les granulés s'y organise également de manière alternative (voir ci-dessous). La ou les zones d'oxygénation intermédiaires représentent des espaces sans granules et peuvent être obtenus par tout moyen approprié, de préférence par l'insertion d'une grille ou d'un crible en dessous de la couche de granules sus-jacente.

La prise d'air ayant accès à l'atmosphère libre est généralement située à faible hauteur au-dessus du sol pour les stations enterrées ou à hauteur du dessus de la cuve. La sortie par ventilation haute est située à une hauteur permettant de créer une différence de pression entre les deux points qui est suffisante pour générer une circulation naturelle à travers le réacteur. Dans la pratique, des différences de hauteur entre la prise d'air et la sortie de la ventilation haute de 5 à 10 m sont généralement suffisantes, de préférence la sortie de la ventilation haute est installée au faîte du toit d'une maison. Le diamètre des conduites de la ventilation haute doit être suffisant pour fournir un débit d'air suffisant dans le réacteur. Généralement le diamètre requis est d'au moins 100 mm. Il est à noter que pour les stations d'épuration intégrant un réacteur de prétraitement anaérobie (voir également ci-dessous), la ventilation haute est en général déjà prévue pour des raisons d'évacuation des gaz toxiques et les mauvaises odeurs. Dans ces cas, cette ventilation haute peut être utilisée pour l'aération du réacteur aérobie.

Pour la ventilation du dispositif d'assainissement, l'espace de vide entre les granules permet un apport d'air et donc d'oxygène nécessaire au métabolisme de la biomasse pour qu'elle assure pleinement sa fonction de digestion des charges polluantes contenues dans l'eau usée à traiter. La capacité de ventilation est évidemment fonction des caractéristiques du dispositif d'assainissement, mais d'une manière générale elle représente jusqu'à 450 l/m³ de vides entre les granules.

Les granules durs des supports microbiologiques peuvent être de tout type approprié permettant l'établissement d'un biofilm sur leur surface. Il est important que les granules soient résistants mécaniquement à l'écrasement pour ne pas se dégrader dans le temps et éviter des affaissements et ainsi diminuer la capacité et la performance d'oxygénation entre les granules ou même engendrer le colmatage du réacteur. Ainsi, il peut s'agir de granules d'origine naturelle ou artificielle, minérale ou organique, notamment des granules d'argile expansée, des granules de céramique, de kaolin traité, des billes synthétiques, etc. De préférence, il s'agit de supports poreux ayant une bonne absorption et une bonne rétention de l'eau de manière à réduire le risque de dessèchement du biofilm pendant les périodes d'absence d'eaux usées. De manière particulièrement avantageuse, les supports sont des granules d'argile expansée clinkérisés. La forme des granules peut être quelconque dans la mesure où le garnissage en granules dans le réacteur aérobie laisse suffisamment d'interstices pour l'écoulement des eaux et le passage de l'air (notamment pendant les périodes de faible débit en eaux usées). De préférence, les granules sont des granules de forme grossièrement sphérique pour optimiser le volume d'espace d'oxygénation entre les granules. La granulométrie des granules est choisie en fonction du débit attendu, de la vitesse de percolation souhaitée ou nécessaire à une dégradation suffisante, du degré de performance recherché et des dispositions constructives du dispositif d'assainissement. D'une manière générale, la granulométrie retenue sera entre 5 et 30 mm, de préférence entre 8 et 20 mm, par exemple une granulométrie 8/16 ou 8/20.

Dans un mode de réalisation particulièrement avantageux les supports microbiologiques sont composés d'argile expansé caractérisé par une structure interne cellulaire à alvéoles ouvertes comprise dans une écorce dure, poreuse, résistante, clinckérisé et un pH neutre, avec une granulométrie pouvant varier entre 5 et 30 mm, de préférence entre 8 et 20 mm, par exemple une granulométrie 8/16 ou 8/20. L'argile expansée présente idéalement une résistance à l'écrasement entre 0.7 et 4.5 N/mm² et une résistance à la compression > 0.1 N/mm². La porosité est de préférence supérieure à 80% avec une capacité de rétention d'eau jusque 30%. Le taux d'infiltration approprié est de 200 à > 500 mm/minute selon la granulométrie utilisée.

Le dispositif d'assainissement d'eaux usées comprend de préférence en outre un répartiteur hydraulique installé au-dessus du lit microbiologique et en-dessous de l'arrivée des eaux usées prétraitées. Le répartiteur hydraulique comprend une surface de répartition perforée couvrant la totalité du lit microbiologique. Dans sa forme la plus simple le répartiteur hydraulique est constitué de la surface de répartition perforée sur laquelle se déversent les eaux usées en provenance de l'arrivée d'eau. Cette surface peut être directement déposée sur le lit microbiologique (sur le lit de granules) ou peut être monté à une certaine distance. Dans ce dernier cas, l'espace entre le lit et la surface de répartition peut également servir de zone d'oxygénation si elle est raccordée à la prise d'air. En variante ou de manière complémentaire, cet espace peut également être relié à la sortie par ventilation haute.

La surface de répartition peut aussi comprendre un bord périphérique. Un tel bord ou relief périphérique peut servir à contenir un certain volume d'eau et à ainsi améliorer la répartition sur toute la surface et à réguler le débit apporté au lit microbiologique. La surface de répartition peut être généralement plane ou elle peut comprendre des canaux de répartition, de préférence sous forme d'ondulations de la surface de répartition. Les ondulations forment alors des canaux multiples, parallèles ou non, dont la fonction première est d'assurer une bonne répartition de l'eau sur toute la surface du lit biologique. Les creux des canaux ou ondulations sont percés d'orifices de percolation multiples, de préférence de densité et de section adaptée afin de permettre une uniformité de répartition de la charge hydraulique. Ces canaux ou ondulations ont également l'effet d'augmenter la solidité et la stabilité du répartiteur hydraulique.

Dans une variante particulièrement intéressante du dispositif d'assainissement d'eaux usées, le répartiteur hydraulique comprend en outre un auget basculant agencé au-dessus de la surface de répartition et en-dessous de l'arrivée des eaux usées. L'auget basculant est alors conçu de manière à pouvoir basculer alternativement autour d'un axe pour déverser les eaux usées d'un côté ou de l'autre de l'auget basculant. L'avantage d'un tel auget est que l'eau peut être introduite alternativement sur une moitié ou l'autre du lit laissant ainsi le temps à la percolation et à la ré-oxygénation par l'air du lit microbiologique entre deux déversements. De préférence, la surface de répartition comprend alors en plus un relief de séparation au centre sous l'auget basculant pour maintenir l'eau du côté du déversement.

Le dispositif d'assainissement d'eaux usées selon l'invention comprend un tube vertical placé dans le réacteur aérobie, dont l'extrémité inférieure se trouve en-dessous du niveau de l'évacuation des eaux épurées et dont l'extrémité supérieure se trouve au-dessus du niveau supérieur de la cuve, ouverte à l'atmosphère libre. Ce tube vertical présente une ou des ouvertures à hauteur de la ou des couches intermédiaires d'oxygénation et est raccordée à la prise d'air de manière à assurer un flux d'air au travers de ces zones.

Pour retenir les matières résiduaires dans le réacteur aérobie, le dispositif d'assainissement selon l'invention, comprend de préférence en outre un filtre secondaire agencé à l'évacuation des eaux épurées. Le filtre secondaire est de préférence amovible pour permettre son nettoyage et son remplacement éventuel. Dans une variante particulièrement avantageuse, le filtre secondaire est intégré à l'extrémité inférieure du tube vertical et est ainsi aisément accessible.

Afin de permettre de détecter toute anomalie de fonctionnement entrainant une montée des eaux dans le réacteur aérobie, le dispositif d'assainissement comprend préférentiellement en outre une alarme appropriée. Une telle alarme est de préférence également passive (ne consommant donc pas d'énergie) et peut comprendre par exemple une tige verticale pourvue d'un flotteur montée en partie basse, la tige verticale étant adaptée pour se déplacer verticalement en fonction du niveau hydraulique dans le réacteur aérobie. Ainsi lorsque le niveau des eaux monte trop dans le réacteur aérobie, la tige verticale monte et devient visible en surface/de l'extérieur du dispositif et/ou peut déclencher un voyant passif ou même un interrupteur relié à une alarme électrique, visuelle ou sonore.

De manière particulièrement préférée, la tige verticale de l'alarme (passive) est intégrée à l'intérieur du tube vertical. Le dispositif d'alarme ainsi conçu permet individuellement ou simultanément de signaler selon le cas, soit l'obturation du filtre secondaire, soit l'obturation du réacteur biologique, soit un défaut d'évacuation des eaux usées en aval de la station d'épuration.

Dans une variante avantageuse, le dispositif comprend en outre, à l'intérieur du tube vertical, une conduite verticale de prélèvement d'eaux épurées dont extrémité supérieure ouverte se trouve à hauteur de l'extrémité supérieure du tube vertical. Une telle conduite de prélèvement permet ainsi de prélever des échantillons d'eau en vue d'en apprécier la propreté ou pour analyse de sa qualité. L'extrémité inférieure de la conduite peut se trouver au centre, en amont ou en aval du filtre dans le sens de l'écoulement des eaux. Il est également envisagé de prévoir deux conduites pour les prélèvements en amont et en aval du filtre. L'extrémité supérieure ouverte de la ou des conduite(s) de prélèvement peut être fermée par un couvercle, un bouchon, un clapet ou un capuchon si nécessaire.

Dans certaines variantes du dispositif de traitement d'eau ou d'assainissement d'eaux usées, le filtre secondaire comprend une cavité intérieure entourée de milieu filtrant et l'extrémité ouverte inférieure de la conduite de prélèvement se trouve à l'intérieur de la cavité intérieure du filtre. La cavité intérieure assure donc la fonction de chambre de prélèvement.

### Brève description des dessins

D'autres particularités et caractéristiques de l'invention ressortiront de la description détaillée de quelques modes de réalisation avantageux présentés ci-dessous, à titre d'illustration, en se référant aux dessins annexés. Ceux-ci montrent:

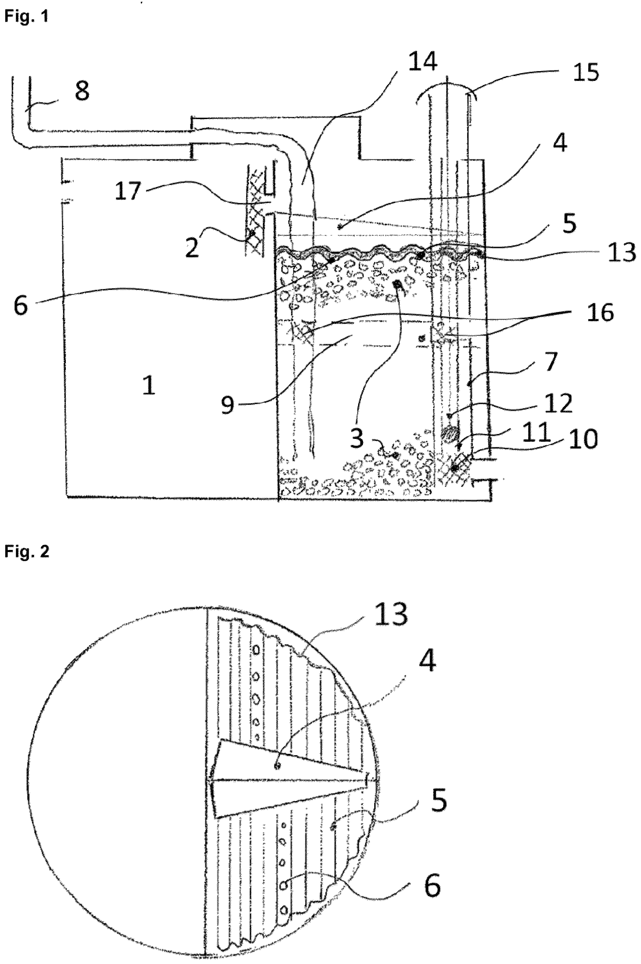

Fig. 1: est une coupe transversale d'une variante avantageuse du dispositif d'assainissement selon l'invention ;
Fig. 2: est une vue du dessus sur la variante de la Fig. 1 ; et

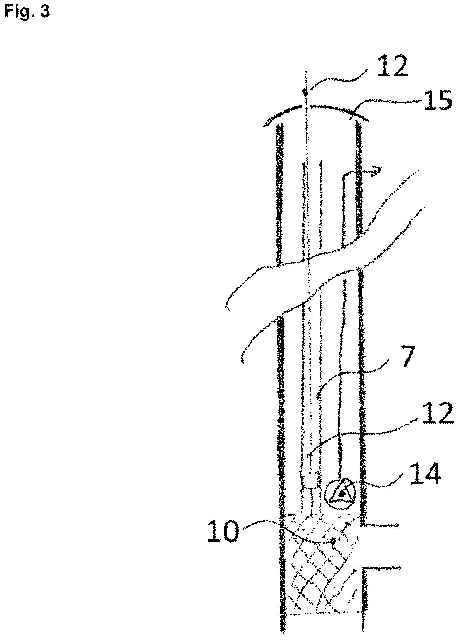

Fig. 3: est une coupe transversale d'un détail de la variante de la Fig. 1.

### Description d'une exécution préférée

La présente invention concerne donc en particulier un dispositif d'assainissement passif (on entend par « passif » un dispositif sans consommation d'énergie pendant le fonctionnement normal hors maintenance) des eaux usées domestiques, agricoles ou industrielles sans consommation d'énergie et de préférence sans apport d'enzymes ou autres substances naturelles ou chimiques de quelque nature que ce soit.

Une variante avantageuse de l'invention comprend un réacteur vertical passif à culture fixée opérée par percolation alternée et séquencée aérobie qui permet une digestion des charges polluantes par une biomasse composée de bactéries (biofilm) qui se fixent naturellement sur les supports inertes naturels et pérennes.

L'organisation du dispositif et les structures des supports permettent d'optimaliser
- l'absorption naturelle de l'O₂ dans l'eau à épurer,
- la mise en contact de la biomasse avec l'air permettant aux bactéries d'absorber et de consommer l'oxygène nécessaire à leur performance de digestion des charges polluantes présentes dans l'eau percolée,
- une parfaite répartition de la charge hydraulique sur les supports par dispersion alternée et séquencée,
- le circuit hydraulique au travers du dispositif,
- le rapport optimalisé surface biomasse / surface eau usée percolante,
- la pérennité de l'efficacité du dispositif par des supports dimensionnés, calculés et agencés de manière à ne pas se colmater,
- la pérennité du dispositif par l'emploi de matériaux inertes, non biodégradables, auto-résistants à l'écrasement, et
- la performance épuratoire en un seul transit de percolation et sans qu'une quelconque autre de phase de traitement ne soit nécessaire autre que le prétraitement (fosse toutes eaux).

L'oxygénation de la biomasse (bactéries, biofilm) se réalise selon deux processus distincts non concomitants
- par transfert de l'oxygène contenu dans l'air à l'eau usée par contact superficiel au cours de la percolation de l'eau au travers du dispositif et
- par absorption de l'oxygène contenu dans l'air présent entre les structures durant les phases intermédiaires de la percolation.

Afin de permettre d'atteindre les performances épuratoires souhaitées, le dispositif prend en compte et intègre les paramètres de dimensionnement nécessaires tels que
- la charge hydraulique,
- les différentes charges polluantes organiques et chimiques,
- les charges matières sédimentables,
- les charges matières en suspension,
- la capacité hydraulique en adéquation avec le volume de supports bactériens,
- la vitesse de biodégradabilité,
- le degré de biodégradabilité,
- le temps de rétention de l'eau dans la station d'épuration,
- le temps nécessaire au transfert O₂ pour l'oxygénation de la biomasse,
- les variations de charges polluantes normalisées,
- les variations de charges hydrauliques normalisées,
- les normes de rejets réglementaires.

### Principes généraux d'un mode réalisation avantageux

L'assainissement des eaux usées procède généralement en trois phases, elles-mêmes divisées en phases fonctionnelles secondaires.

### Phase 1 : le prétraitement

Le prétraitement consiste en principe en un stockage des eaux usées brutes avec comme finalité
- de sédimenter les matières solides - elles constituent les boues primaires,
- de mettre en surnageant les surnageants à évacuer telles que graisses, champoings, savons etc. - elles constituent également les boues primaires,
- d'assurer une première digestion / liquéfaction par action bactérienne anaérobie dont le développement est spontané, sans apport d'enzymes ou autres substance de quelle que nature que ce soit,
- d'assurer une préfiltration aux fins d'éviter le transfert de matières solides ou surnageantes vers le réacteur biologique aérobie,
- de présenter une contenance de volume suffisant permettant de réduire la fréquence de vidange nécessaire des sédiments,
les eaux sortant de la cuve de prétraitement étant appelées eaux prétraitées.

### Phase 2 : le traitement aérobie

Le traitement proprement-dit consiste à développer le maximum de bactéries (biomasse) sur des supports spécifiquement adaptés pour permettre de les sédentariser.

Les structures de support (lit fixe) sont optimalisées dans leur dimensionnement, leur forme et leur agencement afin d'optimaliser les surfaces de contact eau usée / biomasse.

La biomasse est mise en situation aérobie, c'est-à-dire en présence d'oxygène, nécessaire à leur métabolisme pour atteindre les performances souhaitées de digestion des charges polluantes.

Pour ce faire, différents principes d'oxygénation sont développés et appliqués dans le dispositif. La biomasse (bactéries) sera alimentée par
- soit l'oxygène dissout dans l'eau percolante,
- soit l'oxygène contenu dans l'air en phase d'absence de percolation,
- soit les deux à la fois,
chaque séquence étant consécutive du transit de l'eau usée prétraitée au travers des différentes composantes des structures du lit microbiologique.

Durant cette phase les charges polluantes organiques et chimiques sont ainsi digérées jusqu'à atteindre les normes de rejet attendues.

### Phase 3 : la post-filtration

Elle est composée d'un dispositif intégré de filtration des particules résiduelles éventuelles, minéralisées ou non.

Le filtre secondaire est composé d'une masse filtrante de nature indifférente, de préférence en structures à alvéolaires ouvertes de dimensions adaptées.

### Description détaillée des phases décrites ci-dessus

La phase 1 relève du principe de la Fosse Toutes Eaux 1 (FTE) classique, autrement appelée également « fosse septique ». La fosse toutes eaux est de préférence équipé de préfiltres 2 (filtre primaire) destinés à éviter le transfert des matières solides et surnageantes vers le réacteur biologique aérobie.

La séquence « fosse toutes eaux » est
- soit intégrée à la phase de traitement (station d'épuration des eaux mono-cuve),
- soit séparée de la phase de traitement (station d'épuration des eaux multi-cuves).

### Phase 2

### Principe de base - chambre de traitement

Deux objectifs essentiels sont recherchés et présentés par le dispositif de traitement (phase 2). L'objectif premier est de pouvoir se passer de toute consommation d'énergie pendant le fonctionnement normal et dès lors de disposer d'une station d'épuration des eaux dite « passive ». Le second objectif est la conception et la construction d'un réacteur biologique pérenne, ne nécessitant pas le remplacement du substrat de percolation, ni d'autre intervention, que le nettoyage du filtre secondaire.

Un dispositif selon l'invention ne dispose donc d'aucune pompe, compresseur d'air ou autre équipement électrique ou électromécanique destiné à l'oxygénation de l'eau à traiter.

### Le lit fixe 3

Le dispositif est équipé de structures supports de bactéries (appelé lit fixe) permettant le développement de la biomasse qui les colonise, s'y fixe et s'y développe.

Le lit fixe est de préférence composé de préférence exclusivement de matériaux durs naturels non biodégradables, inertes, stables et pérennes dans le temps et mécaniquement résistants.

Les matériaux qui le composent sont généralement de forme grossièrement sphérique ou toute autre forme permettant entre elles une circulation d'air et/ou d'eau.

Les matériaux qui le composent sont de préférence de structure poreuse pour permettre une bonne absorption et une bonne rétention de l'eau dans les structures.

Les matériaux qui le composent sont de préférence rugueux pour permettre une bonne accroche de la biomasse sur les structures.

Son architecture spécifique apporte les spécificités suivantes :
- exonère de tout risque de colmatage par une granulométrie et une densité adaptée,
- permet une parfaite répartition de l'écoulement de la charge hydraulique au travers des structures par un rapport de vide entre structures adapté,
- permet une bonne accroche de la biomasse par ses structures rugueuses,
- permet une régulation de la charge hydraulique par absorption partielle de l'eau grâce à ses structures poreuses.

L'ensemble de ces dispositions constructives et conceptuelles conduit à une structure globale du dispositif, pérenne et ne nécessitant pas son remplacement à terme

### La dispersion de l'eau

La dispersion de la charge hydraulique sur le lit fixe est de préférence réalisée par un auget basculant 4 placé en dessous de l'arrivée des eaux prétraitées 17 et fonctionnant séquentiellement et alternativement à droite et à gauche, en particulier sur une surface de répartition spécialement adaptée pour permettre une répartition surfacique uniforme.

La surface de répartition 5 peut être caractérisée par exemple par une forme ondulée perforée. Les perforations 6 multiples de la surface de répartition sont préférablement caractérisées par un espacement et un diamètre d'ouverture permettant une bonne répartition de la charge hydraulique. La structure périphérique de la surface de répartition comprend de préférence un relief permettant et générant le retour sur le répartiteur de la charge hydraulique séquentielle non encore percolée lors du passage aller. Les perforations sont idéalement définies par un espacement et un diamètre de perforation permettant une répartition de la charge hydraulique en deux passages séquentiels, l'un aller, l'autre retour.

### L'oxygénation de la biomasse sur toute sa surface et hauteur

Outre la présence d'air entre les structures composant le dispositif, l'oxygénation est encore optimalisée par ventilation du lit fixe par un courant d'air frais traversier obtenu par une ou plusieurs zones d'oxygénation intermédiaires par des fenêtres de circulation d'air 16
- au départ d'une tuyauterie d'aspiration par le tube vertical 7 relié à la prise d'air 15,
- en sortie par ventilation haute 8 intégrant la ventilation de la phase anaérobie (prétraitement).

L'oxygénation de l'eau à traiter est ainsi assurée par le transfert naturel de l'O₂ dans l'eau (O₂ dissout).

Pour ce faire, la surface de contact air/eau est calculée en tenant compte des paramètres standards que sont :
- le taux de transfert naturel O₂ dans l'eau aux températures moyennes des eaux en station d'épuration,
   - sans présence de lumière ni UV ; donc en dehors de toute action de phyto-développement,
- le temps de rétention de l'eau minimum nécessaire pour que le transfert O₂ soit réalisé.

La surface de transfert O₂ / eau est multipliée grâce aux phases multiples et complémentaires suivantes :
- une ventilation naturelle consécutive des espaces d'air disponible entre les structures du lit fixe,
- une ventilation de l'eau lors de la dispersion par basculement alterné de l'auget,
- un lit fixe dont les composantes permettent une présence d'air entre ses structures,
- à hauteur d'une ou plusieurs zones d'oxygénation ou de ventilation intermédiaire 9.

### Phase 3 - Principe de base

La phase 3 consiste à retenir les matières résiduelles éventuelles en aval du dispositif, qu'elles soient minéralisées ou non.

La filière épuratoire par lit vertical passif à culture fixée à percolation alternée aérobie génère des volumes de matières résiduaires particulièrement faibles. Ces particules sont retenues par et dans la zone de filtration secondaire (filtre secondaire) 10 :
- constituée d'un filtre à alvéoles ouvertes de densité appropriée,
- disposée en aval du filtre à culture fixée,
- située en amont de la tubulure de sortie des eaux traitées.

Le filtre secondaire est de préférence amovible pour permettre son nettoyage et son remplacement éventuel.

Un tube vertical de positionnement du filtre peut assurer en plus la fonction de cage de positionnement 11 de l'alarme passive.

### Le tube vertical à fonction multiples

La chambre de traitement est équipée d'un tube vertical à fonctions multiples. Il assure à la fois
- la ou les ventilations intermédiaires du lit fixe,
- l'accès au filtre secondaire,
- le positionnement d'un tube de prélèvement des eaux épurées,
- l'accès pour le rinçage éventuel du dispositif,
- la fonction de cage de positionnement de l'alarme de disfonctionnement par obturation accidentelle du dispositif.

### Alarme passive

Une alarme 12 passive utilisable dans le contexte de l'invention peut être composée d'un flotteur et d'une tige verticale d'alerte de montée des eaux anormales dans le dispositif.

### CARACTERISTIQUES DE L'INVENTION

Les caractéristiques multiples de l'invention et des modes de réalisation avantageux de celle-ci résident notamment dans les points suivants :

Le dispositif est équipé de structures supports de bactéries permettant le développement de la biomasse qui les colonise, s'y fixe et s'y développe en génération spontanée 3.

Le lit fixe 3 peut être composé exclusivement de matériaux naturels non biodégradables, inertes, stables et pérennes dans le temps.

Les matériaux qui le composent sont de préférences de forme sphérique ou toute autre forme permettant entre elles une circulation d'air et/ou d'eau.

Les matériaux qui le composent sont avantageusement de structure poreuse pour permettre une bonne absorption et une bonne rétention de l'eau dans les structures. De plus, ils sont stables dans le temps par l'emploi d'un matériau mécaniquement résistant à l'écrasement.

L'architecture spécifique du lit fixe aérobie apporte les spécificités et avantages suivants :
- exonère de tout risque de colmatage par une granulométrie et une densité adaptée,
- permet une parfaite répartition de l'écoulement de la charge hydraulique au travers des structures par un rapport de vide entre structures adapté,
- permet une bonne accroche de la biomasse par ses structures rugueuses,
- permet une régulation de la charge hydraulique par absorption partielle de l'eau grâce à ses structures poreuses.

L'architecture de la structure périphérique de la surface de répartition 5 peut être caractérisée par un bord ou relief périphérique 13 permettant et générant le retour sur le répartiteur de la charge hydraulique séquentielle non encore percolée lors du passage aller.

L'architecture de la structure périphérique de la surface de répartition 5 peut être caractérisée par des canaux de répartition de l'eau perforés de forme ondulée.

Les perforations 6 multiples de la surface de répartition sont de préférence caractérisées par un espacement et un diamètre d'ouverture permettant une bonne répartition de la charge hydraulique.

L'architecture de l'ensemble du dispositif d'oxygénation par ventilation multiple est assurée par
- ventilation verticale et horizontale unique ou multiples simultanées par le tube vertical 7,
- ventilation naturelle consécutive des espaces d'air disponible entre les structures du lit fixe,
- ventilation de l'eau lors de la dispersion par basculement alternatif de l'auget basculant 4,
- ventilations par une ou plusieurs zones d'oxygénation intermédiaire 9 traversière.

Un tube vertical 7 à fonctions multiples est prévu de manière à assurer à la fois
- la ou les ventilations intermédiaires 9 du lit fixe,
- l'accès au filtre secondaire 10,
- l'accès pour le rinçage éventuel du dispositif,
- la fonction de cage de positionnement du dispositif de prélèvement des eaux épurées,
- la fonction de cage de positionnement 11 de l'alarme passive de disfonctionnement,
- la fonction de cage de positionnement de la pompe de relevage 14 le cas échéant.

### Légende:

- 1: Fosse Toutes Eaux (FTE)
- 2: Filtre primaire
- 3: Lit microbiologique (lit fixe) du réacteur (biologique) aérobie, deux couches, séparées par une zone d'oxygénation intermédiaire
- 4: Auget basculant
- 5: Surface de répartition
- 6: Perforations
- 7: Tube vertical
- 8: Sortie par ventilation haute
- 9: Zone d'oxygénation intermédiaire
- 10: Filtre secondaire
- 11: Cage de positionnement de l'alarme
- 12: Alarme
- 13: Bord ou relief périphérique
- 14: Pompe de relevage
- 15: Prise d'air
- 16: Fenêtres de circulation d'air
- 17: Arrivée des eaux prétraitées sur l'auget basculant

## Revendications

1. Dispositif d'assainissement d'eaux usées comprenant au moins une cuve avec
un réacteur entièrement aérobie à lit microbiologique (3)
à percolation des eaux par
gravitation, avec:
une arrivée des eaux usées en partie haute du réacteur aérobie et
une évacuation des eaux épurées en partie basse de la cuve, et
un compartiment de prétraitement (1) en amont du réacteur aérobie adapté pour la sédimentation et/ou la digestion anaérobie des eaux usées,
une sortie du compartiment de prétraitement
étant raccordée à l'arrivée des eaux du réacteur aérobie et comprenant un filtre primaire (2) agencé pour limiter le transfert de matières solides ou surnageantes vers le réacteur aérobie,
le lit microbiologique (3) comprenant
aux moins deux couches superposées de supports microbiologiques sous forme de granules durs d'une granulométrie entre 5 et 30 mm,
deux couches superposées adjacentes étant séparées entre-elles par une ou plusieurs zones intermédiaires d'oxygénation (9) sans granules,
la ou les zones intermédiaires d'oxygénation (9) étant raccordées
d'une part à une prise d'air (15) et
d'autre part à une sortie par ventilation naturelle haute (8),
un tube vertical (7) placé dans le réacteur aérobie, dont l'extrémité inférieure se trouve en-dessous du niveau de l'évacuation des eaux épurées et dont l'extrémité supérieure est la prise d'air (15) se trouvant au-dessus du niveau supérieur de la cuve ouverte à l'atmosphère libre ; le tube vertical (7) présentant une ouverture (16) à hauteur de la ou des zones d'oxygénation intermédiaires (9) et étant relié à la prise d'air (15),
un transfert d'oxygène s'effectuant via une ou plusieurs fenêtres de circulation d'air (16) aménagées dans le tube de la prise d'air (15) à la hauteur de la zone intermédiaire d'oxygénation (9),
l'oxygénation étant réalisée d'une part par un passage de l'eau sous forme de gouttes , de préférence sous forme de pluie, par la ou les zones intermédiaires d'oxygénation (9) et d'autre part par le passage de l'air au travers des interstices formés entre les granules durs en contre-courant à une percolation de l'eau de haut en bas.

2. Dispositif d'assainissement d'eaux usées selon la revendication 1, dans lequel les supports microbiologiques sont des granules durs d'argile expansée, de céramique, de kaolin traité ou de matière synthétique, ayant de préférence une granulométrie entre 8 et 20 mm.

3. Dispositif d'assainissement d'eaux usées selon la revendication 1 ou 2, dans lequel le compartiment de prétraitement est une cuve fosse toutes eaux (1, fosse septique) séparée existante.

4. Dispositif d'assainissement d'eaux usées selon l'une quelconque des revendications 1 à 3, comprenant en outre un répartiteur hydraulique installé au-dessus lit microbiologique (3) et en-dessous de l'arrivée des eaux prétraitées dans le réacteur aérobie, le répartiteur hydraulique comprenant une surface de répartition (5) perforée (6) couvrant la totalité du lit microbiologique (3).

5. Dispositif d'assainissement d'eaux usées selon la revendication 4, dans lequel la surface de répartition (5) comprend en outre un bord périphérique (13).

6. Dispositif d'assainissement d'eaux usées selon la revendication 4 ou 5, dans lequel la surface de répartition (5) comprend des canaux de répartition, de préférence sous forme d'ondulations de la surface de répartition.

7. Dispositif d'assainissement d'eaux usées selon l'une quelconque des revendications 4 à 6, dans laquelle le répartiteur hydraulique comprend en outre un auget basculant (4) agencé au-dessus de la surface de répartition (5) et en-dessous de l'arrivée des eaux prétraitées (17), l'auget basculant (4) étant conçu pour pouvoir basculer alternativement autour d'un axe pour déverser les eaux prétraitées d'un côté ou de l'autre de l'auget basculant (4).

8. Dispositif d'assainissement d'eaux usées selon l'une quelconque des revendications 1 à 7, comprenant en outre un filtre secondaire (10) agencé à l'évacuation des eaux épurées pour retenir les matières résiduaires dans le réacteur aérobie.

9. Dispositif d'assainissement d'eaux usées selon l'une quelconque des revendications 1 à 8, comprenant en outre une alarme (12) passive comprenant une tige verticale pourvue d'un flotteur monté en partie basse, la tige verticale étant adaptée pour se déplacer verticalement en fonction du niveau hydraulique dans le réacteur aérobie.

10. Dispositif d'assainissement d'eaux usées selon la revendications 8, dans lequel le filtre secondaire (10) comprend une cavité intérieure entourée de milieu filtrant, le dispositif comprenant en outre une conduite verticale de prélèvement d'eaux épurées dont l'extrémité ouverte inférieure se trouve à l'intérieur de la cavité intérieure du filtre et dont l'extrémité supérieure ouverte se trouve à hauteur de l'extrémité supérieure du tube vertical (7) de manière à être accessible de l'extérieur de la cuve.

11. Dispositif d'assainissement d'eaux usées selon les revendications 8 et 10 ou les revendications 8, 9 et 10, dans lequel le filtre secondaire (10) est intégré à l'extrémité inférieure du tube vertical (7).

12. Dispositif d'assainissement d'eaux usées selon les revendications 8 et 9 ; les revendications 8, 9 et 10 ou les revendications 8, 9, 10 et 11, dans lequel la tige verticale de l'alarme passive est intégrée à l'intérieur du tube vertical (7).

## Patentansprüche

1. Vorrichtung zur Klärung von Abwasser, umfassend wenigstens einen Behälter mit
einem gänzlich aeroben Reaktor mit mikrobiologischem Bett (3) mit schwerkraftbedingter Perkolation des Wassers, mit:
einer Zuleitung für Abwasser im oberen Teil des aeroben Reaktors und
einer Ableitung für gereinigtes Wasser im unteren Teil des Behälters, und einer Vorbehandlungskammer (1) stromaufwärts des aeroben Reaktors, die für die Sedimentation und/oder die anaerobe Vergärung des Abwassers eingerichtet ist,
wobei ein Ablauf der Vorbehandlungskammer mit der Zuleitung für das Wasser aus dem aeroben Reaktor verbunden ist und
einen Primärfilter (2) umfasst, der zum Begrenzen des Transfers von Feststoffen oder aufschwimmenden Stoffen zu dem aeroben Reaktor hin vorgesehen ist,
einem mikrobiologischen Bett (3), umfassend
wenigstens zwei übereinanderliegende Schichten aus mikrobiologischen Trägern in Form von harten Granulaten mit einer Korngröße zwischen 5 und 30 mm,
wobei zwei benachbarte übereinanderliegende Schichten durch eine oder mehrere Oxygenierungs-Zwischenzone(n) (9) ohne Granulate voneinander getrennt sind,
wobei die Oxygenierungs-Zwischenzone(n) verbunden sind
einerseits mit einem Lufteinlass (15) und
andererseits mit einem Auslass (8) durch obere natürliche Belüftung,
einem vertikalen Rohr (7), das in dem aeroben Reaktor platziert ist, dessen unteres Ende sich unter dem Niveau der Ableitung für gereinigtes Wasser befindet und dessen oberes Ende der Lufteinlass (15) ist, der sich über dem oberen Niveau des Behälters befindet und zur freien Atmosphäre offen ist;
wobei das vertikale Rohr (7) eine Öffnung (16) in Höhe der Oxygenierungs-Zwischenzone(n) (9) aufweist und mit dem Lufteinlass (15) verbunden ist, wobei ein Transfer von Sauerstoff über eines oder mehrere Fenster für die Zirkulation von Luft (16) stattfindet, die in dem Rohr des Lufteinlasses (15) in der Höhe der Oxygenierungs-Zwischenzone (9) vorgesehen sind,
wobei die Oxygenierung einerseits durch ein Fließen von Wasser in Tropfenform, bevorzugt in Form von Regen, durch die Oxygenierungs-Zwischenzone(n) (9) und andererseits durch das Strömen von Luft durch die zwischen den harten Granulaten gebildeten Zwischenräume hindurch im Gegenstrom zu einer Perkolation des Wassers von oben nach unten realisiert wird.

2. Vorrichtung zur Klärung von Abwasser nach Anspruch 1, wobei die mikrobiologischen Träger harte Granulate aus Blähton, aus Keramik, aus behandeltem Kaolin oder aus synthetischem Material sind, die bevorzugt eine Korngröße zwischen 8 und 20 mm haben.

3. Vorrichtung zur Klärung von Abwasser, nach Anspruch 1 oder 2, wobei die Vorbehandlungskammer ein vorhandener separater Senkbehälter (1, Klärgrube) ist.

4. Vorrichtung zur Klärung von Abwasser nach einem der Ansprüche 1 bis 3, ferner umfassend einen Hydraulikverteiler, der über dem mikrobiologischen Bett (3) und unter der Zuleitung für vorbehandeltes Abwasser in dem aerobischen Reaktor installiert ist, wobei der Hydraulikverteiler eine mit Perforationen (6) versehene Verteilerfläche (5) umfasst, die das gesamte mikrobiologische Bett (3) abdeckt.

5. Vorrichtung zur Klärung von Abwasser nach Anspruch 4, wobei die Verteilerfläche (5) ferner einen umlaufenden Rand (13) umfasst.

6. Vorrichtung zur Klärung von Abwasser nach Anspruch 4 oder 5, wobei die Verteilerfläche (5) Verteilerkanäle umfasst, bevorzugt in Form von Wellungen der Verteilerfläche.

7. Vorrichtung zur Klärung von Abwasser nach einem der Ansprüche 4 bis 6, wobei der Hydraulikverteiler ferner einen Kipplöffel (4) umfasst, der über der Verteilerfläche (5) und unter der Zuleitung (17) für vorbehandeltes Abwasser angeordnet ist, wobei der Kipplöffel (4) so ausgelegt ist, dass er alternierend um eine Achse kippen kann, um das vorbehandlelte Wasser auf der einen oder der anderen Seite des Kipplöffels (4) auszuschütten.

8. Vorrichtung zur Klärung von Abwasser nach einem der Ansprüche 1 bis 7, ferner umfassend einen Sekundärfilter (10), der an der Ableitung für gereinigtes Wasser angeordnet ist, um die Reststoffe in dem aeroben Reaktor zurückzuhalten.

9. Vorrichtung zur Klärung von Abwasser nach einem der Ansprüche 1 bis 8, ferner umfassend einen passiven Alarm (12), der einen vertikalen Stab umfasst, der mit einem Schwimmer versehen ist, der im unteren Teil montiert ist, wobei der vertikale Stab angepasst ist, um sich in Abhängigkeit von dem hydraulischen Niveau in dem aeroben Reaktor in vertikaler Richtung zu bewegen.

10. Vorrichtung zur Klärung von Abwasser nach Anspruch 8, wobei der Sekundärfilter (10) einen inneren Hohlraum umfasst, der von Filtermedium umgeben ist, wobei die Vorrichtung ferner eine vertikale Rohrleitung zur Entnahme von gereinigtem Wasser umfasst, deren unteres offenes Ende sich im Inneren des inneren Hohlraums des Filters befindet und deren offenes oberes Ende sich in Höhe des oberen Endes des vertikalen Rohrs (7) befindet, so dass es von außerhalb des Behälters zugänglich ist.

11. Vorrichtung zur Klärung von Abwasser nach den Ansprüchen 8 und 10 oder den Ansprüchen 8, 9 und 10, wobei der Sekundärfilter (10) an dem unteren Ende des vertikalen Rohrs (7) integriert ist.

12. Vorrichtung zur Klärung von Abwasser, nach den Ansprüchen 8 und 9; den Ansprüchen 8, 9 und 10 oder den Ansprüchen 8, 9, 10 und 11, wobei der vertikale Stab des passiven Alarms in das Innere des vertikalen Rohrs (7) integriert ist.

## Claims

1. Device for treating wastewater comprising at least one tank having
an entirely aerobic microbiological bed reactor (3) with gravitational water percolation with:
a wastewater inlet in the upper part of the aerobic reactor and
a purified water drain in the lower part of the tank, and
a pretreatment compartment (1) upstream of the aerobic reactor suitable for settling and/or anaerobic digestion of the wastewater,
an outlet from the pretreatment compartment
being connected to the water inlet of the aerobic reactor and comprising a primary filter (2) arranged to limit the transfer of solid or supernatant materials to the aerobic reactor,
the microbiological bed (3) comprising
at least two superposed layers of microbiological supports in the form of hard granules of a particle size between 5 and 30 mm,
two adjacent superposed layers being separated from one another by one or more intermediate oxygenation zones (9) without granules,
the intermediate oxygenation zone or zones (9) being connected,
on the one hand, to an air intake (15) and,
on the other hand, to an outlet by natural upward ventilation (8),
a vertical tube (7) placed in the aerobic reactor, the lower end of which is located below the level of the purified water drain and the upper end of which is the air intake (15) located above the upper level of the tank open to the free atmosphere; the vertical tube (7) having an opening (16) at the height of the intermediate oxygenation zone or zones (9) and being connected to the air intake (15),
oxygen transfer taking place via one or more air circulation windows (16) provided in the tube of the air intake (15) at the height of the intermediate oxygenation zone (9),
oxygenation being carried out, on the one hand, by passage of the water in droplet form, preferably in the form of rain, through the intermediate oxygenation zone or zones (9) and, on the other hand, by passage of air through the interstices formed between the hard granules countercurrently to percolation of water from the top downwards.

2. Device for treating wastewater according to claim 1, wherein the microbiological carriers are hard granules of expanded clay, ceramic, treated kaolin, or synthetic material, preferably having a particle size of between 8 and 20 mm.

3. Device for treating wastewater according to claim 1 or 2, wherein the pretreatment compartment is an existing separate all-water tank (1, septic tank).

4. Device for treating wastewater according to any one of claims 1 to 3, further comprising a hydraulic distributor installed above the microbiological bed (3) and below the pretreated water inlet into the aerobic reactor, the hydraulic distributor comprising a perforated (6) distribution surface (5) covering the entire microbiological bed (3).

5. Device for treating wastewater according to claim 4, wherein the distribution surface (5) furthermore comprises a peripheral edge (13).

6. Device for treating wastewater according to claim 4 or 5, wherein the distribution surface (5) comprises distribution channels, preferably in the form of corrugations in the distribution surface.

7. Device for treating wastewater according to any one of claims 4 to 6, wherein the hydraulic distributor furthermore comprises a tipping trough (4) arranged above the distribution surface (5) and below the pretreated water inlet (17), the tipping trough (4) being designed to be capable of tipping alternately about an axis to discharge the pretreated water on one side or the other of the tipping trough (4).

8. Device for treating wastewater according to any one of claims 1 to 7, further comprising a secondary filter (10) arranged at the purified water drain to retain residual materials in the aerobic reactor.

9. Device for treating wastewater according to any one of claims 1 to 8, further comprising a passive alarm (12) comprising a vertical rod provided with a float mounted at the lower part, the vertical rod being suited to moving vertically as a function of the hydraulic level in the aerobic reactor.

10. Device for treating wastewater according to claim 8, wherein the secondary filter (10) comprises an internal cavity surrounded by filter medium, the device further comprising a vertical purified water sampling pipe, the lower open end of which is located within the internal cavity of the filter and the upper open end of which is located at the height of the upper end of the vertical tube (7) so as to be accessible from outside the tank.

11. Device for treating wastewater according to claims 8 and 10 or claims 8, 9 and 10, wherein the secondary filter (10) is integrated into the lower end of the vertical tube (7).

12. Device for treating wastewater according to claims 8 and 9, claims 8, 9 and 10, or claims 8, 9, 10 and 11, wherein the vertical rod of the passive alarm is integrated into the interior of the vertical tube (7).
